## Europäisches Patentamt

## European Patent Office

## Office européen des brevets

(19)

(11) Veröffentlichungsnummer: **0 194 477**
**B1**

(12) **EUROPÄISCHE PATENTSCHRIFT**

(45) Veröffentlichungstag der Patentschrift:
**11.01.89**

(21) Anmeldenummer: **86102091.5**

(22) Anmeldetag: **18.02.86**

(51) Int. Cl.⁴: **G01N 23/04**, G01V 5/00, H05G 1/60

(54) Röntgenscanner.

(30) Priorität: **04.03.85 DE 3507607**

(43) Veröffentlichungstag der Anmeldung:
**17.09.86 Patentblatt 86/38**

(45) Bekanntmachung des Hinweises auf die Patenterteilung:
**11.01.89 Patentblatt 89/2**

(84) Benannte Vertragsstaaten:
**BE DE FR GB**

(56) Entgegenhaltungen:
**EP-A- 0 096 440**
**GB-A- 2 113 828**
**US-A- 3 919 467**
**US-A- 4 366 382**
**US-A- 4 383 327**

**ELECTRO CONFERENCE RECORD, 24. - 26. April 1979, Band 4, Seiten 18/3: 1-13, New York, US; W.T. BISIGNANI et al.: "Automated X-ray bomb detection techniques"**

(73) Patentinhaber: **Heimann GmbH, Weher Köppel 6, D-6200 Wiesbaden 1(DE)**

(72) Erfinder: **Dönges, Gerhard, Am Markt 1, D-6209 Heidenrod-Kemel(DE)**
Erfinder: **Koch, Cornelius, Leberberg 20, D-6200 Wiesbaden(DE)**

(74) Vertreter: **Mehl, Ernst, Dipl.-Ing. et al, Postfach 22 13 17, D-8000 München 22(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Röntgenscanner mit einem Röntgenstrahler für ein fächerförmiges Röntgenstrahlenbündel auf einer Seite und einer Zeile von Einzeldetektoren auf der anderen Seite einer Transportvorrichtung für zu untersuchendes Gut sowie mit einer Elektronik zur Erfassung und Verarbeitung der Detektorsignale und einem nachgeschalteten Sichtgerät, bei dem die Elektronik einen Bildspeicher aufweist, der für jeden Einzeldetektor je eine Speicherzeile aufweist.

Ein Röntgenscanner nach dem ersten Teil von Anspruch 1 befindet sich im Handel und dient beispielsweise zur Gepäckuntersuchung. Jeder der Detektoren besteht bei einem bekannten Röntgenscanner aus einem Szintillator zur Umwandlung von Röntgenstrahlung in sichtbares Licht, das mittels einer Fotodiode in einen elektrischen Strom umgesetzt wird. Zur Verarbeitung der parallel vorliegenden Meßwerte werden diese über elektronische Schalter (analoge Multiplexer) in eine serielle Folge analoger Meßwerte umgesetzt, digitalisiert, systematische Fehler kompensiert und sukzessive so in einen digitalen Bildspeicher eingeschrieben, daß bei der Darstellung des Speicherinhaltes über einen Digital-Analog-Wandler auf einem Videomonitor ein durchlaufendes Bild entsteht. Bei horizontal laufendem Bild werden spaltenweise Daten in den Bildspeicher geschrieben. Jeder Detektor erzeugt dann eine Zeile des Videobildes.

Systematische Fehler folgender Art können dabei auftreten:
– Dunkelströme der Fotodioden, Offsetströme von nachgeschalteten Multiplexern und Verstärkern ergeben einen Gesamtoffsetfehler, der für jeden Detektorkanal anders ist.
– Amplitudenfehler ergeben sich durch die Ungleichheit der Detektoren und die Abstrahlcharakteristik der Röntgenquelle.

Diese systematischen Fehler lassen sich kompensieren, indem die Offsetwerte $O_i$ ($i = 1 \ldots m$) aller Kanäle i bei abgeschalteter Röntgenquelle gemessen und in einem digitalen Speicher (Offset-RAM) abgelegt werden. Durch Subtraktion der gemessenen Offsetwerte von den Gesamtsignalen $S_i$ erhält man die Nutzsignale $N_i$. Amplitudenfehler werden in einem Meßsystem erfaßt, in dem die Signalamplituden bei 100% Strahlungsintensität gemessen und vom Offset bereinigt als Referenzwerte $R_i$ in dem Signal-RAM abgespeichert werden. Durch Division der Signalwerte $N_i$ durch die Referenzwerte $R_i$ erhält man ein auf 100% normiertes Nutzsignal $NN_i$.
$NN_i = N_i/R_i$,
$i = 1,2 \ldots m$
$0 < R_i \le 1$.

Die Erfassung der unterschiedlichen Referenzwerte $R_i$ für 100% Intensität wird jedoch im Gegensatz zur Offsetmessung außer vom vernachlässigbaren elektrischen Rauschen durch das Quantenrauschen des Röntgenstrahlers insbesondere bei kleinen Meßdosiswerten erheblich verfälscht. Das dem Signal überlagerte Quantenrauschen wird beim Abspeichern der Referenzwerte "eingefroren". Bei der anschließenden Division wird das "eingefrorene Rauschen" im Verhältnis $1/R_i$ verstärkt. Eingefrorenes Rauschen erzeugt einen streifigen Bildhintergrund.

Für die Offset- und Signalwerte gibt es Grenzwerte, außerhalb derer eine Verarbeitung im Rechenwerk zu fehlerbehaftet sein würde. Beim Überschreiten dieser Grenzen sind somit Fehler in der bildlichen Wiedergabe zu erwarten.

Bei der Vielzahl der Detektorkanäle (z. B. 500) ist der Ausfall einzelner Kanäle durchaus wahrscheinlich.

Ein ähnlicher Röntgenscanner ist auch aus der Patentschrift US-A 4 366 382 bekannt.

Der Erfindung liegt die Aufgabe zugrunde, einen Röntgenscanner der eingangs genannten Art so auszubilden, daß gegenüber dem Stand der Technik eine fehlerverminderte Signalverarbeitung erfolgt.

Diese Aufgabe ist erfindungsgemäß dadurch gelöst, daß die Elektronik einen Komparator für die Erkennung fehlerhafter Signale aufweist, durch den der Bildspeicher derart steuerbar ist, daß er bei einem fehlerhaften Detektorsignal die Übernahme der Informationen der vorhergehenden Speicherzeile in die dem fehlerhaften Detektor zugeordnete Speicherzeile bewirkt. Bei dem erfindungsgemäßen Röntgenscanner wird das Auftreten von Offset- bzw. Signalfehlern mittels eines Komparators detektiert. Das Auftreten eines Fehlers reicht schon aus, die Übernahme eines normierten Signalmeßwertes in den Bildspeicher zu verhindern. An dessen Stelle wird der vorausgegangene, nicht fehlerbehaftete Wert übernommen. In der bildlichen Darstellung bedeutet dies eine Verdopplung einer Zeile an der Stelle eines defekten Kanals. Die Sichtbarkeit dieser Substitution ist äußerst gering.

Eine Weiterbildung der Erfindung besteht darin, daß die Elektronik ein Korrekturglied für die Bildung eines Referenzsignales bei 100% Strahlungsintensität aufweist, indem der Mittelwert einer Vielzahl solcher Meßsignale gebildet wird. Der Meßzyklus für das Referenzsignal $R_i$ wird dabei nicht nur einmal ausgeführt, sondern n mal. Der Meßwert $R_i$ jedes Kanals wird in einem Akkumulator n mal aufsummiert und durch n dividiert.

$$\overline{R}_i = \frac{\sum\limits_{j=1}^{n} R_{ij}}{n}$$

Die Genauigkeit der Messung verbessert sich nach bekannten Gesetzen der Statistik um den Faktor $\sqrt{n}$.

Für die in gewissen Zeitabständen zu wiederholende Messung von $R_i$ steht wesentlich mehr Zeit zur Verfügung als zur Messung des Nutzsignales, für das die Meßperiodendauer begrenzt ist. Die Anzahl n der Messungen kann damit fast beliebige Werte annehmen.

Wie bereits erwähnt, kann nur die Messung der Referenzwerte mehrfach ausgeführt werden bzw. über einen längeren Zeitraum, als einer Meßperiode entsprechend, erfolgen.

Dem zum Bildaufbau ausgewerteten Nutzsignal ist somit die Quantenrauschamplitude überlagert, wie sie bei der Erfassung des Referenzsignales in nur einer Meßperiode auftreten würde.

Speicherung und Verarbeitung der Meßwerte erfolgen in den Scannern nach der Analog-Digital-Wandlung dem Stand der Technik entsprechend digital. Durch die Anzahl der Quantisierungsstufen, der Auflösung in Bit, liegt der verarbeitbare Signalamplitudenbereich fest. Wird das Nutzsignal mit Hilfe der abgespeicherten Referenzwerte auf 100% normiert, so liegen aufgrund des überlagerten Quantenrauschens im Nutzsignal statistisch die Hälfte aller Meßwerte über 100% Signalamplitude. Signalunterschiede können nur bis 100% Amplitude erfaßt werden, so daß Information in Form von Grauunterschieden des Videobildes verloren geht. Gemäß einer Weiterbildung der Erfindung können Mittel zum Absenken der Amplitude des Nutzsignales während der Messung im Vergleich zu der einer Strahlungsintensität von 100% zugeordneten Amplitude vorhanden sein. Die Amplitude des Nutzsignales wird demgemäß mindestens um die Hälfte des zu erwartenden maximalen Betrages der Rauschspannung nach erfolgtem Meßzyklus für das Referenzsignal vermindert, so daß Signale plus Rauschen zusammen noch im Signalbereich liegen.

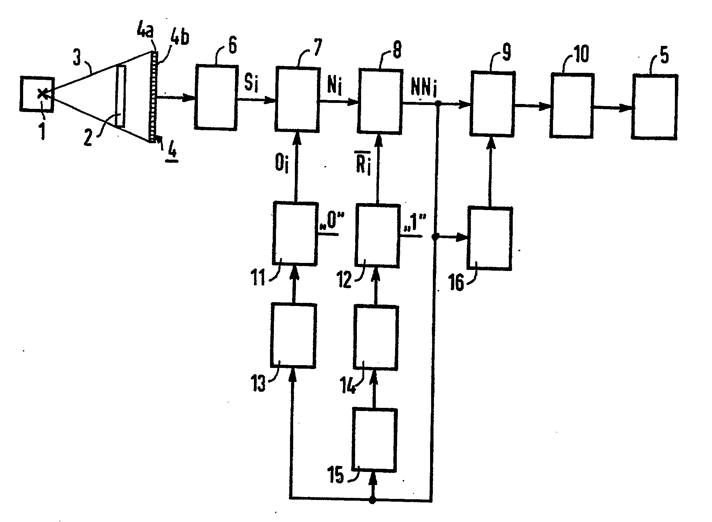

Die Erfindung ist nachfolgend anhand eines in der Zeichnung dargestellten Ausführungsbeispieles näher erläutert.

In der Zeichnung ist ein Röntgenstrahler 1 dargestellt, der nicht dargestelltes Gut auf einer Transportvorrichtung 2 mit einem fächerförmigen Röntgenstrahlenbündel 3 durchstrahlt, dessen Fächerebene quer zur Transportrichtung liegt, welche senkrecht zur Zeichenebene verläuft. Die aus dem Gut austretende Strahlung wird von einer Zeile 4 aus einzelnen Detektoren 4a, 4b usw. erfaßt, deren Ausgangssignale über eine Elektronik einem Sichtgerät 5 zugeführt wird. Die Elektronik umfaßt einen Analog-Digital-Wandler 6, einen Subtrahierer 7, einen Dividierer 8, ein Übernahmeregister 9, einen Bildspeicher 10, zwei elektronische Schalter 11, 12, ein Offset-RAM 13, ein Signal-RAM 14, einen Akkumulator 15 und einen Komparator 16.

Die Komponenten 7, 11, 13 bewirken die eingangs geschilderte Kompensation der Offset-Werte. Das Offset-RAM 13 dient dabei zur Ablage der Offset-Werte aller Kanäle bei abgeschalteter Röntgenquelle und die hier abgelegten Offset-Werte werden im Subtrahierer 7 vom Gesamtsignal $S_i$ subtrahiert.

Die Komponenten 8, 12, 14, 15 dienen in der geschilderten Weise zur Erzeugung des Referenzsignales $R_i$. Im Akkumulator 15 werden dabei die Referenzwerte $R_i$ summiert und durch ihre Anzahl n geteilt, so daß am Ausgang des Akkumulators 15 der Wert $\overline{R}_i$ erscheint. Dieser Wert wird im Signal-RAM 14 gespeichert und im Dividierer 8 durch den jeweiligen Signalwert $N_i$ zur Bildung des normierten Nutzsignales $NN_i$ dividiert.

Der Komparator 16 detektiert das Auftreten von Offset- bzw. Signalfehlern. Die Fehlermeldung wird in Form eines Fehlerbits getrennt für Offset- und Referenzsignal mit im jeweiligen RAM 13, 14 abgelegt. Bei der Erfassung des Nutzsignales werden die RAM's 13, 14 gelesen und die beiden Fehlerbits logisch so verknüpft, daß das Auftreten eines Fehlers in der geschilderten Weise ausreicht, um die Übernahme eines normierten Signalmeßwertes in den Bildspeicher 10 zu verhindern und anstattdessen den vorausgegangenen, nicht fehlerbehafteten Wert zu übernehmen.

Die Absenkung der Amplitude des Nutzsignales erfolgt in der eingangs geschilderten Weise nach erfolgtem Meßzyklus für das Referenzsignal mit Hilfe des Dividierers 8.

## Patentansprüche

1. Röntgenscanner mit einem Röntgenstrahler (1) für ein fächerförmiges Röntgenstrahlenbündel (3) auf einer Seite und einer Zeile von einzelnen Detektoren (4) auf der anderen Seite einer Transportvorrichtung (2) für zu untersuchendes Gut sowie mit einer Elektronik (6 bis 16) zur Erfassung und Verarbeitung der Detektorsignale und einem nachgeschalteten Sichtgerät (5), bei dem die Elektronik (6 bis 16) einen Bildspeicher (10) aufweist, der für jeden Einzeldetektor (4a, 4b usw.) je eine Speicherzeile aufweist, dadurch gekennzeichnet, daß die Elektronik (6 bis 16) einen Komparator (16) für die Erkennung fehlerhafter Signale aufweist, durch den der Bildspeicher (10) derart steuerbar ist, daß er bei einem fehlerhaften Detektorsignal die Übernahme der Informationen der vorhergehenden Speicherzeile in die dem Detektor (4a, 4b usw.) zugeordnete Speicherzeile bewirkt.

2. Röntgenscanner nach Anspruch 1, dadurch gekennzeichnet, daß Mittel (8) zum Absenken der Amplitude des Nutzsignales während der Messung im Vergleich zu der einer Strahlungsintensität von 100% zugeordneten Amplitude vorhanden sind.

3. Röntgenscanner nach Anspruch 1 oder 2, dadurch gekennzeichnet, daß die Elektronik (6 bis 16) ein Korrekturglied (15) für die Bildung eines Referenzsignales bei 100% Strahlungsintensität aufweist, in dem der Mittelwert aus einer Vielzahl von Meßsignalen gebildet wird.

## Claims

1. X-ray scanner having an x-ray source (1) for producing a fan-shaped bundle of x-rays (3) on one side and a row of individual detectors (4) on the other side of a conveying device (2) for goods to be examined and also having an electronic system (6 to 16) for detecting and processing the detector signals and a display device (5) connected thereafter, for which the electronic system (6 to 16) has an image memory (10), which has for each individual detector (4a, 4b etc) a memory line, characterised in that the electronic system (6 to 16) has a comparator (16) for recognising faulty signals, through which the image memory (10) is able to be controlled in such a way that with a faulty detector signal it effects the transfer of the data of the previous memory line into the memory line allocated to the detector (4a, 4b etc).

2. X-ray scanner according to claim 1, characterised in that

means (8) are present for decreasing the amplitude of the useful signal during measurement in comparison with the amplitude associated with a radiation intensity of 100%.

3. X-ray scanner according to claim 1 or 2, characterised in that

the electronic system (6 to 16) has a correcting element (15) for formation of a reference signal at 100% radiation intensity, in which the average value is formed from a plurality of measured signals.

**Revendications**

1. Scanner à rayons X comprenant – disposé de part et d'autre d'un dispositif de convoyage (2) pour les objets à inspecter – un émetteur de rayons X (1) pour l'émission d'un faisceau de rayons X en éventail (3) et une rangée de détecteurs individuels (4), de même qu'un système électronique (6 à 16) pour la saisie et le traitement des signaux des détecteurs et un appareil de visualisation aval (5), le système électronique (6 à 16) comportant une mémoire d'images (10) qui comporte pour chaque détecteur individuel (4a, 4b, etc.) une ligne de mémorisation, caractérisé en ce que le système électronique (6 à 16) comporte un comparateur (16) pour la reconnaissance de signaux affectés de défauts, et au moyen duquel la mémoire d'images (10) est susceptible d'être commandée, de telle façon qu'à l'apparition d'un signal de détecteur affecté d'un défaut, il provoque le transfert des informations de la ligne de mémoire précédente dans la ligne de mémoire associée au détecteur (4a, 4b, etc.).

2. Scanner à rayons X selon la revendication 1, caractérisé en ce que des moyens (8) sont prévus pour abaisser l'amplitude du signal utile pendant la mesure, par rapport à l'amplitude associée à une intensité de rayonnement de 100%.

3. Scanner à rayons X selon la revendication 1 ou 2, caractérisé en ce que le système électronique (6 à 16) comporte un organe de correction (15) pour la formation d'un signal de référence pour une intensité de rayonnement de 100%, et dans lequel la valeur moyenne est formée à partir d'un grand nombre de signaux de mesure.